# EUROPEAN PATENT SPECIFICATION

(11) **EP 3 137 421 B1**
(45) Date of publication and mention of the grant of the patent: **19.07.2023**
(21) Application number: 15785331.8
(22) Date of filing: 28.04.2015
(51) Int. Cl.: C01F 11/18, C01F 3/00, C01F 5/24, C01F 7/00, C01F 13/00

(54) **METHODS FOR PRODUCING ALKALINE EARTH CARBONATES**
VERFAHREN ZUR HERSTELLUNG VON ERDALKALICARBONATEN
PROCÉDÉS DE PRODUCTION DE CARBONATES ALCALINO-TERREUX

(30) Priority: 28.04.2014 US 201461985036 P
(43) Date of publication of application: 08.03.2017
(73) Proprietor: Lixivia, Inc., Santa Barbara, California 93101 (US)
(72) Inventor: WYRSTA, Michael, Santa Barbara, California 93103 (US); KOMON, Zachary J.A., San Diego, California 92126 (US)
(74) Representative: Kador & Partner Part mbB
(86) International application number: PCT/US2015/028058
(87) International publication number: WO 2015/168159

(56) References cited:
- WO-A1-2012/095815
- WO-A2-2009/144382
- US-A1- 2005 106 110
- US-A1- 2011 139 628
- US-A1- 2012 189 515
- US-A1- 2013 164 198
- US-A1- 2013 336 859
- HANNU-PETTERI MATTILA ET AL: "Reduced Limestone Consumption in Steel Manufacturing Using a Pseudo-catalytic Calcium Lixiviant", ENERGY & FUELS., vol. 28, no. 6, 19 June 2014 (2014-06-19), pages 4068-4074, XP055425118, WASHINGTON, DC, US. ISSN: 0887-0624, DOI: 10.1021/ef5007758

## Description

This application claims the benefit of priority of U.S. Provisional Application No. 61/985,036, filed April 28, 2014.

### Field of the Invention

The field of the invention is hydrometallurgy, particularly as it is related to the extraction or recovery of alkaline earth carbonates.

### Background

The following description includes information that may be useful in understanding the present invention. It is not an admission that any of the information provided herein is prior art or relevant to the presently claimed invention, or that any publication specifically or implicitly referenced is prior art.

There is a long-standing need to efficiently and cost-effectively recover commercially valuable metals (for example calcium) from low yield sources, such as mine tailings.

Historically, it has been especially desirable to recover alkaline earth elements. Alkaline earth elements, also known as beryllium group elements, include beryllium (Be), magnesium (Mg), calcium (Ca), strontium (Sr), barium (Ba) and radium, (Ra), which range widely in abundance. Applications of these commercially important metals also vary widely, and include uses as dopants in electronic components, structural materials, and in the production foods and pharmaceuticals.

Methods of isolating of one member of the alkaline earth family, calcium, from minerals such as limestone, have been known since ancient times. In a typical process limestone or a similar mineral source is calcined or otherwise roasted to produce calcium oxide (CaO), or quicklime. This material reacts with water to form calcium hydroxide (Ca(OH)₂), or slaked lime. Calcium hydroxide, in turn, can be suspended in water and reacted with dissolved carbon dioxide (CO₂) to form calcium carbonate (CaCO₃), which has a variety of uses. Approaches that have been used to isolate other members of this family of elements often involve the production of insoluble hydroxides and oxides using elevated temperatures or strong acids. Such approaches, however, are not suitable for other sources of alkaline earth elements (such as steel slag), and are not sufficiently selective to be readily applied to mixtures of alkaline earth elements.

Hydrometallurgy can also be used to isolate metals from minerals, ores, and other sources. In such methods ore is typically crushed and/or pulverized to increase the surface area prior to exposure to a solution (also known as a lixiviant) capable of forming a soluble salt of the desired metal. Suitable lixiviants extract the desired metal through solubilization, and leave behind an extracted residue. Following collection of the lixiviant solution, the metal can be recovered from the solution by various means, for example electrodeposition and/or precipitation from the solution.

Conventional hydrometallurgy methods, however, present with several problems. Identification of lixiviants that provide efficient and selective extraction of the desired metal or metals has been a significant technical barrier to their adoption in the isolation of some metals. Similarly the expense of purchasing and handling lixiviant components, pollution problems associated with their use and disposal, and difficulties in adapting such techniques to current production plants, has limited the widespread adoption of such methods.

Solutions to these problems have been attempted. U.S. Patent Publication No. 2004/0228783 (to Harris et al.) describes the use of magnesium salts (in addition to hydrochloric acid) as a component of a highly acidic lixiviant used for recovery of other metals from their oxides, with recovery of magnesium oxide from the spent lixiviant by treatment with peroxide. Such highly acidic and oxidative conditions, however, present numerous production and potential environmental hazards that limit their utility. In an approach disclosed in U.S. Patent No. 5,939,034 (to Virnig et al.), metals are solubilized in an ammoniacal thiosulfate solution and extracted into an immiscible organic phase containing guanidyl or quaternary amine compounds. Metals are then recovered from the organic phase by electroplating. Odor issues and the tendency to form hazardous sulfur dioxide, however, limits the utility of this compound.

A similar approach is disclosed in U.S. Patent No. 6,951,960 (to Perraud) in which metals are extracted from an aqueous phase into an organic phase that contains an amine chloride. The organic phase is then contacted with a chloride-free aqueous phase that extracts metal chlorides from the organic phase. Amines are then regenerated in the organic phase by exposure to aqueous hydrochloric acid. Application to alkaline earth elements (for example, calcium) is not clear, however, and the disclosed methods necessarily involve the use of expensive and potentially toxic organic solvents.

In a related approach, European Publication No. EP1309392 (to National University of Singapore) discloses a membrane-based method in which copper is initially complexed with ammonia or organic amines. The copper:ammonia complexes are captured in an organic phase contained within the pores of a porous membrane, and the copper is transferred to an extracting agent held on the opposing side of the membrane. Such an approach, however, requires the use of complex equipment, and processing capacity is necessarily limited by the available surface area of the membrane.

Methods for capturing CO₂ could be used to recover alkaline earth metals, but to date no one has appreciated that such could be done. Kodama et al. (Energy 33(2008), 776-784) discloses a method for CO₂ capture using a calcium silicate (2CaO·SiO₂) in association with ammonium chloride (NH₄Cl). This reaction forms soluble calcium chloride (CaCh), which is reacted with carbon dioxide (CO₂) under alkaline conditions to form insoluble calcium carbonate (CaCO₃) and release chloride ions (Cl-).

Kodama *et al.* uses clean forms of calcium to capture CO₂, but is silent in regard to the use of other alkaline earth elements in this chemistry. That makes sense from Kodoma *et al.* 's disclosure, which notes that a high percentage (approximately 20%) of the NH₄Cl used is lost in the disclosed process, requiring the use of additional equipment to capture ammonia vapor. This loss results in significant process inefficiencies, and raises environmental concerns. Japanese Patent Application No. 2005097072 (to Katsunori and Tateaki) discloses a similar method for CO₂ capture, in which ammonium chloride (NH₄Cl) is dissociated into ammonia gas (NH₃) and hydrochloric acid (HCl), the HCl being utilized to generate calcium chloride (CaCh) that is mixed with ammonium hydroxide (NH₄OH) for CO₂ capture.

WO 2012/055750 (to Omya Development AG) discloses a method for purifying calcium carbonate (CaCO₃), in which impure CaCO₃ is converted to impure calcium oxide (CaO) by calcination. The resulting CaO is treated with ammonium chloride (NH₄Cl) to produce calcium chloride (CaCh), which is subsequently reacted with high purity carbon dioxide (CO₂) to produce CaCO₃ and NH₄Cl, with CaCO₃ being removed from the solution by crystallization with the aid of seed crystals. Without means for capturing or containing the ammonia gas that would result from such a process, however, it is not clear if the disclosed method can be adapted to an industrial scale. The reliance on seed crystals similarly limits industrial use.

Thus, there is still a need for a hydrometallurgical method that provides simple and economical isolation of metal hydroxide forming species.

### Summary of The Invention

The inventive subject matter provides highly efficient, semi-continuous hydrometallurgical methods in which organic amine-based lixiviants are utilized in substoichiometric amounts to recover alkaline earths from raw or waste materials. The lixiviant is regenerated in processes that precipitate the desired metal as a readily collected insoluble salt, and the regenerated lixiviant is recycled for use in subsequent iterations of a cyclical process or returned to a reactor in a continuous process.

One embodiment of the inventive concept is a method for producing an alkaline earth carbonate by mixing a raw material that has multiple extractable materials, including an alkaline earth oxide or hydroxide, with an organic amine containing lixiviant in a vessel or reactor. The lixiviant is provided in sub-stoichiometric amounts relative to the alkaline earth present in the raw material. This mixture is, in turn, mixed with carbon dioxide to form a slurry that includes a relatively insoluble (i.e. solubility of less than 10 g/L) precipitated alkaline earth carbonate salt, extracted raw material, and a mother liquor that includes a regenerated lixiviant. The extracted raw material is enriched in remaining extractable materials relative to the unprocessed raw material. The slurry is processed in a separation unit to separate the alkaline earth carbonate, the extracted raw material, and the mother liquor from each other. Suitable separation units can utilize filtration, settling, centrifugal separation, magnetic separation, or a combination of these. The extracted raw material is further processed to recover the remaining extractable raw materials. The mother liquor is returned to the vessel or reactor, recovering the lixiviant as a regenerated lixiviant and re-using it. In some embodiments the alkaline earth carbonate is collected and further processed by washing. Such processes can be carried out in a continuous fashion, a semi-batch fashion, or on a batch by batch basis.

An embodiment not covered by the claimed inventiion is a method for isolating an alkaline earth (in the form of a carbonate salt) from a raw material by mixing the raw material with a lixiviant in a first vessel, using a sub-stoichiometric amount of the lixiviant relative the alkaline earth content of the raw material. This mixture is transferred to a separation unit, which separates the extracted raw material from alkaline earth that has been solvated by the lixiviant. The solvated alkaline earth is treated with carbon dioxide in a second vessel, which results in the formation of a mixture of insoluble alkaline earth carbonate salt and regenerated lixiviant. This mixture is transferred to a second separation unit, which separates the alkaline earth carbonate salt from the regenerated lixiviant. Some or all of the regenerated lixiviant is then returned to the first separation unit. In some embodiments a portion of the regenerated lixiviant is also returned to the first vessel. Either or both of the separation units can utilize filtration, settling, centrifugal separation, and/or magnetic separation to segregate the components of their respective mixtures. Such processes can be carried out in a continuous fashion, a semi-batch fashion, or on a batch by batch basis.

### Brief Description of The Drawings

Fig. 1 schematically depicts a method of the inventive concept, in which an alkaline earth element is recovered from a sample using a lixiviant, which is regenerated and re-used. Additional extractable materials are then recovered from the extracted raw material, which is relatively enriched in the extractable materials.
Fig. 2 schematically depicts an alternative method of the inventive concept, in which an alkaline earth element is recovered from a sample using a lixiviant, which is regenerated and re-used. Additional extractable materials are then recovered from the extracted raw material, which is relatively enriched in the extractable materials.
Fig. 3 schematically depicts an embodiment of a method not covered by the claimed invention, in which alkaline earth elements are recovered from a sample using a lixiviant, which is regenerated and re-used. At least some of the regenerated lixiviant is returned to a separation unit of the process rather than a reaction vessel.
Fig. 4 schematically depicts an alternative embodiment not covered by the claimed invention, in which different alkaline earth elements are recovered in a sequential manner.
Fig. 5 illustrates the composition of a typical steel slag.

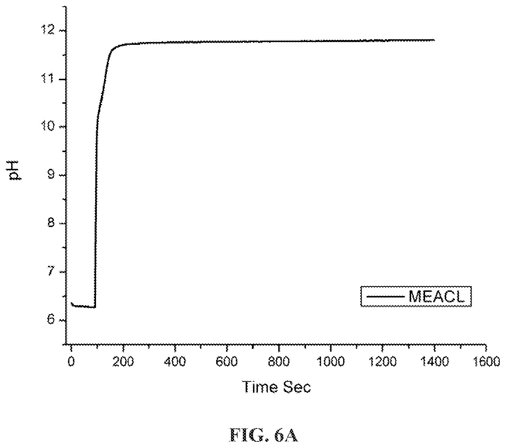

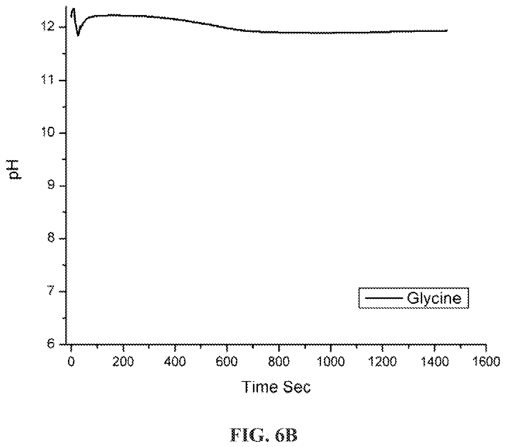

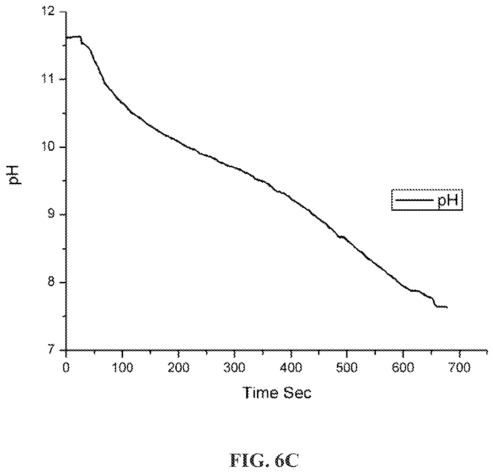

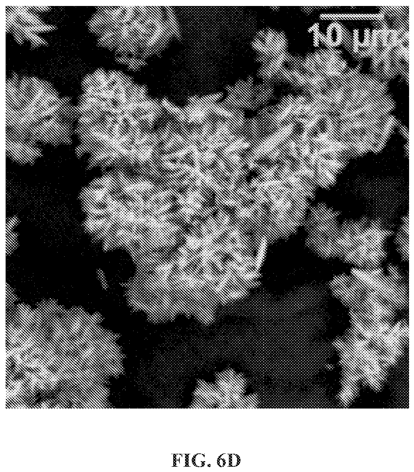

Figs. 6A-6D show the results of specific process steps of methods the inventive concept. Fig. 6A shows pH changes over time as an alkaline earth element is extracted from a low grade source using an organic amine lixiviant. Fig. 6B shows pH changes over time as an alkaline earth element is extracted from a low grade source using a different organic amine lixiviant. Fig. 6C shows pH changes over time as an extracted alkaline earth element is recovered through the use of a precipitant. Fig. 6D is a photomicrograph of a precipitated calcium carbonate product of systems, methods, and compositions of the inventive concept. Note the open structure that contributes to the relatively low density of the carbonate product.
Figs. 7A-7B show exemplary results from one-step and two-step methods of alkaline earth recovery. Fig. 7A shows recovery of calcium in the form of calcium carbonate from two different steel slags. Fig. 7B shows the increase in yield of calcium carbonate from a one-step process compared to a prior art two-step process from two different steel slags as a function of the particle size of the respective steel slags.
Fig. 8 shows the distribution of different products from a single-step method of the inventive concept as a function of the particle size of the raw material.
Fig. 9 shows the yield of calcium in the form of calcium carbonate at different ratios of amine lixiviant to calcium available in the raw material.
Fig. 10 shows the distribution of different products from a combined extraction and precipitation step of a method the inventive concept at different ratios of amine lixiviant to calcium available in the raw material.
Fig. 11 shows exemplary results from pH monitoring during a prior art two-step method.
Figs. 12A-12B show exemplary results from pH monitoring from a combined extraction and precipitation step of a method the inventive concept. Fig. 12A shows the change in pH on suspension of raw material (1), addition of lixiviant (2), first addition of CO₂ (3), cessation of CO₂ (4), second addition of CO₂ (5), and termination (6). Fig. 12B shows a detail of pH changes during a CO₂ addition at different lixiviant: alkaline earth ratios and with different sources of raw material.
Fig. 13 depicts the increase in the amount of steel slag raw material required to produce one ton of calcium carbonate by typical prior art methods relative to the amount required by a method of the inventive concept.
Fig. 14 depicts a table showing the composition of different steel slags.
Fig. 15 depicts a table showing experimental conditions used in two-step and one-step processes.

### Detailed Description

The inventors have discovered a hydrometallurgical method for the recovery of alkaline earth elements (i.e., alkaline earth metals), such as members of the alkaline earth family, through the use of lixiviants that include organic amines. The inventors have determined that such amine-based lixiviants can be regenerated using carbon dioxide. Surprisingly, this regeneration permits extraction of an alkaline earth from a raw material and precipitation of the extracted alkaline earth, for example in the form of a carbonate, in the same reactor and essentially simultaneously, with differences between the physical properties of the carbonate salt produced and the extracted raw material permitting separation by simple physical means.

Throughout the following discussion, numerous references will be made regarding lixiviants. A lixiviant should be understood to be a chemical entity that has the ability to selectively extract metals or metal ions from inorganic or organic solids in an aqueous or other solvent mixture. Similarly, a precipitant should be understood to be a chemical entity that has the ability to form a precipitate that includes such extracted metals or metal ions.

The following discussion provides many exemplary embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed.

In some embodiments, the numbers expressing quantities of ingredients, properties such as concentration, reaction conditions, and so forth, used to describe and claim certain embodiments of the invention are to be understood as being modified in some instances by the term "about." Accordingly, in some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable. The numerical values presented in some embodiments of the invention may contain certain errors necessarily resulting from the standard deviation found in their respective testing measurements. Similarly, unless the context dictates the contrary all ranges set forth herein should be interpreted as being inclusive of their endpoints and open-ended ranges should be interpreted to include only commercially practical values. Similarly, all lists of values should be considered as inclusive of intermediate values unless the context indicates the contrary.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each separate value falling within the range. Unless otherwise indicated herein, each individual value with a range is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

Embodiments of the inventive process can include at least one compound of the general composition depicted as in Compound 1 for use with any source of material that contains one or more a form(s) of alkaline earth oxides, for example calcium oxide (CaO), that can form hydroxides on reaction with water, or alkaline earth hydroxides. Such hydrated forms may be present in the material as it is obtained from nature or can be introduced by processing (for example through treatment with a base, hydration, or by oxidation), and can be stable or transient. Selective extraction of a desired alkaline earth can be based on the presence of a metal hydroxide that has a stronger basicity than the organic amine-based lixiviants used in the extraction process.

Organic amines of the inventive concept have the general formula shown in Compound 1, where N is nitrogen, H is hydrogen, R₁ to R₃ can be an organic (i.e. carbon-containing) group or H, and X is a counterion (*i.e*., a counter anion).

Ny,R₁,R₂,R₃,H-Xz **Compound 1**

Suitable counterions can be any form or combination of atoms or molecules that produce the effect of a negative charge. Counterions can be halides (for example fluoride, chloride, bromide, and iodide), anions derived from mineral acids (for example nitrate, phosphate, bisulfate, sulfate, silicates), anions derived from organic acids (for example carboxylate, citrate, malate, acetate, thioacetate, propionate and, lactate), organic molecules or biomolecules (for example acidic proteins or peptides, amino acids, nucleic acids, and fatty acids), and others (for example zwitterions and basic synthetic polymers). For example, monoethanolamine hydrochloride (MEA·HCl, HOC₂H₄NH₃Cl) conforms to Compound 1 as follows: one nitrogen atom (N₁) is bound to one carbon atom (R₁ = C₂H₅O) and 3 hydrogen atoms (R₂, R₃ and H), and there is one chloride counteranion (X₁ = Cl-). Compounds having the general formula shown in Compound 1 can have a wide range of acidities, and an organic amine of the inventive concept can be selected on the basis of its acidity so that it can selectively react with one or more alkaline earth metal salts or oxides from a sample containing a mixture of alkaline earth metal salts or oxides. Such a compound, when dissolved in water or another suitable solvent, can (for example) effectively extract the alkaline earth element calcium presented in the form calcium hydroxide in a suitable sample (e.g. steel slag). Equation 1 depicts a primary chemical reaction in extracting an insoluble alkaline earth (AE) salt (in this instance a hydroxide salt) from a matrix using an organic amine cation (OA-H+)/counterion ( Cl-) complex (OA-H+/Cl-) as a lixiviant. Note that the OA-H+/Cl- complex dissociates in water into OA-H+ and Cl-.

AE(OH)₂(solid) + 2 OA-H+(aq) + 2 Cl-(aq) → AECl₂(aq) + 2 OA (aq) + 2 H₂O **Equation 1**

The counterion (Cl- ) is transferred from the organic amine cation (OA-H+) to the alkaline earth salt to form a soluble alkaline earth /counterion complex (AECl₂), uncharged organic amine (OA), and water. Once solubilized the alkaline earth/counterion complex can be recovered from solution by any suitable means. For example, addition of a second counterion (SC) in an acid form (for example. H₂SC), which reacts with the alkaline earth cation/counterion complex to form an insoluble alkaline earth salt (AESC), can be used to precipitate the extracted alkaline earth from supernatant and release the counterion to regenerate the organic amine cation/counterion pair, as shown in Equation 2.

AECl₂(aq) + 2 OA (aq) + H₂SC → AESC salt (solid) + 2 OA+ (aq) + 2 Cl- **Equation 2**

Examples of suitable second counterions include polyvalent cations, for example carbonate (which can be supplied as CO₂), sulfate, sulfite, chromate, chlorite, and hydrogen phosphate.

Alternatively, pH changes, temperature changes, or evaporation can be used to precipitate the solubilized alkaline earth. In some embodiments, the alkaline earth element can be recovered by electrodeposition processes, such as electrowinning or electrorefining. In other embodiments of the inventive concept the solubilized alkaline earth element can be recovered by ion exchange, for example using a fixed bed reactor or a fluidized bed reactor with appropriate media.

In preferred embodiments of the inventive concept, an alkaline earth element is recovered by precipitation through reaction of the alkaline earth/lixiviant mixture with carbon dioxide (CO₂), which advantageously regenerates the lixiviant as shown below. It should be appreciated that the process of recovering the alkaline earth element can be selective, and that such selectivity can be utilized in the recovery of multiple alkaline earth elements from a single source as described below.

The organic amine cation/counterion complex can be produced from the uncharged organic amine to regenerate the OA-H+/Cl- lixiviant, for example using an acid form of the counterion (H-Cl), as shown in Equation 3.

OA (aq) + H-Cl(aq) → OA-H+(aq) + Cl- **Equation 3**

In some embodiments of the inventive concept the reaction described in Equation 3 can be performed after the introduction of an uncharged organic amine to a source of an alkaline earth element, with the lixiviant being generated afterwards by the addition of an acid form of the counterion. This advantageously permits thorough mixing of the alkaline earth source with a lixiviant precursor prior to initiating the reaction.

Organic amines suitable for the extraction of alkaline earth elements (for example from calcium containing or, steel slag, and other materials) can have a pKa of about 7 or about 8 to about 14, and can include protonated ammonium salts (*i.e*., not quaternary). Examples of suitable organic amines for use in lixiviants include weak bases such as ammonia, nitrogen containing organic compounds (for example monoethanolamine, diethanolamine, triethanolamine, morpholine, ethylene diamine, diethylenetriamine, triethylenetetramine, methylamine, ethylamine, propylamine, dipropylamines, butylamines, diaminopropane, triethylamine, dimethylamine, and trimethylamine), low molecular weight biological molecules (for example glucosamine, amino sugars, tetraethylenepentamine, amino acids, polyethyleneimine, spermidine, spermine, putrecine, cadaverine, hexamethylenediamine, tetraethylmethylenediamine, polyethyleneamine, cathine, isopropylamine, and a cationic lipid), biomolecule polymers (for example chitosan, polylysine, polyornithine, polyarginine, a cationic protein or peptide), and others (for example a dendritic polyamine, a polycationic polymeric or oligomeric material, and a cationic lipid-like material), or combinations of these. In some embodiments of the inventive concept the organic amine can be monoethanolamine, diethanolamine, or triethanolamine, which in cationic form can be paired with nitrate, bromide, chloride or acetate anions. In other embodiments of the inventive concept the organic amine can be lysine or glycine, which in cationic form can be paired with chloride or acetate anions. In a preferred embodiment of the inventive concept the organic amine is monoethanolamine, which in cationic form can be paired with a chlorine anion.

Such organic amines can range in purity from about 50% to about 100%. For example, an organic amine of the inventive concept can have a purity of about 50%, about 55%, about 60%, about 65%, about 70%, about 75%, about 80%, about 85%, about 90%, about 95%, about 97%, about 99%, or about 100%. In a preferred embodiment of the inventive concept the organic amine is supplied at a purity of about 90% to about 100%. It should be appreciated that organic amines can differ in their ability to interact with different members of the alkaline earth family and with contaminating species, and that such selectivity can be utilized in the recovery of multiple alkaline earths as described below.

Inventors further contemplate that zwitterionic species can be used in suitable lixiviants, and that such zwitterionic species can form cation/counterion pairs with two members of the same or of different molecular species. Examples include amine containing acids (for example amino acids and 3-aminopropanoic acid), chelating agents (for example ethylenediaminetatraacetic acid and salts thereof, ethylene glycol tetraacetic acid and salts thereof, diethylene triamine pentaacetic acid and salts thereof, and 1,2-bis(o-aminophenoxy)ethane-N,N,N',N'-tetraacetic acid and salts thereof), and others (for example betaines, ylides, and polyaminocarboxylic acids).

Organic amines for use in lixiviants can be selected to have minimal environmental impact. The use of biologically derived organic amines, such as glycine, is a sustainable practice and has the beneficial effect of making processes of the inventive concept more environmentally sound. In addition, it should be appreciated that some organic amines, such as monoethanolamine, have a very low tendency to volatilize during processing. In some embodiments of the inventive concept an organic amine can be a low volatility organic amine (i.e., having a vapor pressure less than or equal to about 1% that of ammonia under process conditions). In preferred embodiments of the inventive concept the organic amine is a non-volatile organic amine (*i.e.,* having a vapor pressure less than or equal to about 0.1% that of ammonia under process conditions). Capture and control of such low volatility and non-volatile organic amines requires relatively little energy and can utilize simple equipment. This reduces the likelihood of such low volatility and non-volatile organic amines escaping into the atmosphere and advantageously reduces the environmental impact of their use.

An example of an application of the inventive concept is in the isolation of insoluble calcium hydroxide, using an ammonium chloride containing lixiviant. Any source that contains a basic form of calcium can be suitable for use in a process of the inventive concept, for example steel slag, fly ash, cement kiln dust, ash, shale ash, acetylene catalyst waste, dolime, lime, low-grade lime, and calcium hydroxide. In some embodiments of the inventive concept a calcium source can be selected on the basis of high calcium content per unit mass with high levels of contamination, for example low grade lime or dolomitic lime. In other embodiments of the inventive concept, calcium can be recovered from lime, for example low grade lime. Equation 4 represents a reaction that takes place on contacting calcium hydroxide (Ca(OH)₂))-containing steel slag with an ammonium chloride lixiviant.

Ca(OH)₂(solid) + 2 NH₄+(aq) + 2 Cl-(aq) → CaCl₂(aq) + 2 NH₃ (aq) + 2 H₂O **Equation 4**

Calcium is extracted from the slag as soluble calcium chloride (CaCl₂), with the generation of uncharged ammonia (NH₃) and water.

A soluble alkaline earth salt, for example calcium chloride and the soluble ammonia from Equation 4 (or soluble ammonium ion if the reaction is metal oxide/hydroxide limited) can easily be separated from the insoluble solid residue, for example by filtration. Once separated, the soluble aqueous fraction can be used as-is if the target process can tolerate the small quantity of ammonia or ammonium chloride. Alternatively, the solution can be further processed as needed. In a preferred embodiment of the inventive concept the lixiviant is regenerated and the alkaline earth calcium is recovered as an insoluble salt through the addition of carbon dioxide (CO₂), as shown in Equation 5. It should be appreciated that aqueous CO₂ can be in the form of ionized carbonic acid (i.e., 2H+ plus CO₃2-).

CaCl₂(aq) + 2 NH₃ (aq) + CO₂ (aq) + H₂O → CaCO₃ (solid) + 2 NH₃ (aq) + + 2 Cl- (aq) **Equation 5**

It should be appreciated that methods of the inventive concept can also be used to selectively extract and/or refine a desired alkaline earth element (such as calcium) from an ore containing other contaminants, for example other alkaline earth elements. By using the lixiviants described herein, one skilled in the art can exploit the varying degrees of basicity associated with each alkaline earth element, and choose a lixiviant of corresponding acidity to achieve selective extraction.

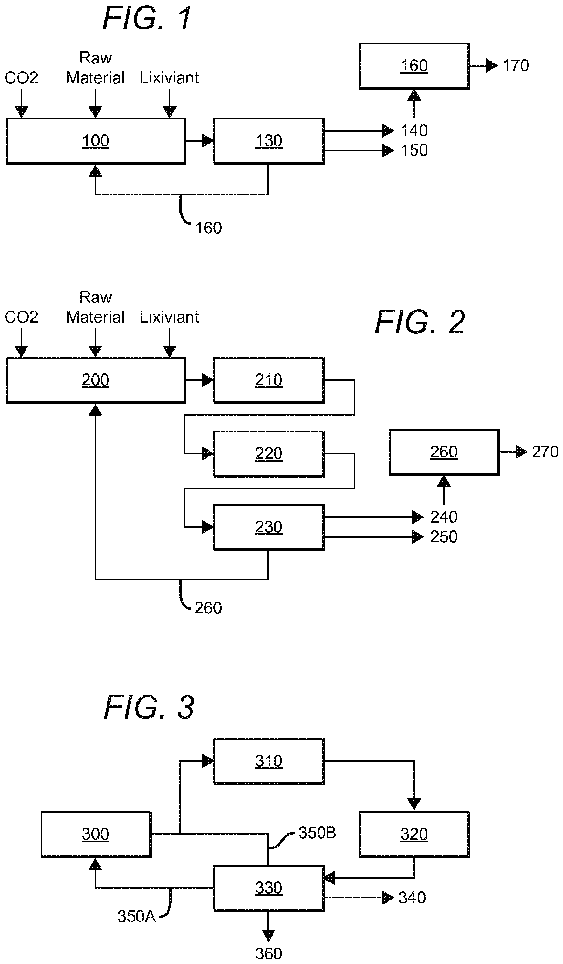

As noted above, in many instances the use of a low volatility and/or non-volatile lixiviant is desirable. An example of such a process of the inventive concept is the extraction of calcium (Ca) and/or another alkaline earth from a raw material that includes other commercially useful and extractable materials, using a non-volatile organic amine, such as monoethanolamine hydrochloride. **Figure 1** schematically depicts an example of such a process. A raw material containing an alkaline earth and another extractable material is contacted with a lixiviant and with carbon dioxide in a reaction vessel 100. A solvent can also be included. The solvent used can be any protic or highly polar solvent that can support the solvation of calcium salts in large amounts. Examples of suitable solvents include water, glycerol, and water glycerol mixtures. The resulting reaction mixture is a slurry of extracted raw material and insoluble alkaline earth carbonate salt (for example, calcium carbonate) suspended in a solvent system that includes a regenerated lixiviant. The slurry is transferred to a separator 130, which produces three products streams that include the extracted raw material 40, the alkaline earth carbonate 150, and the regenerated lixiviant 160. Surprisingly, the Applicant has found that the characteristic size and/or density of alkaline earth carbonates produced in such a process permits ready separation from the extracted raw material without the use of elaborate separation methods or equipment.

A wide variety of separators and separation modes can be used. Typically, separation can be provided by settling or by centrifugation, although filtration and magnetic separation are also considered. Suitable filtration techniques include the use of bed filters, mesh filters, bag filters, belt filters, and filter presses. In a preferred embodiment of the inventive concept, the separator 130 supports continuous separation, and can include a hydrocyclone.

As noted above, lixiviant that is regenerated during the extraction and precipitation process. This advantageously permits the use of sub-stoichiometric amounts of lixiviant compound, reducing the costs of implementing methods of the inventive concept and reducing potential environmental impacts. Separation of solids from the slurry produced in reaction vessel 100 by the separator 130 provides a product stream of such regenerated lixiviant 160. This can be returned to the reaction vessel 100 for re-use. Such re-use advantageously further reduces the cost of implementing methods of the inventive concept and can essentially eliminate lixiviant waste.

Following extraction of the alkaline earth, the extracted raw material is enriched in the remaining extractable material (relative to the raw material as supplied). This enrichment can make recovery from the extracted raw material practical where such recovery is not commercially feasible from the raw material as supplied. As shown, the extracted raw material 140 can be further processed 160 to extract such a secondary extractable material 170.

In other embodiments of the inventive concept separation of the components of the slurry produced by the reaction of lixiviant with the alkaline earth bearing raw material, production of insoluble alkaline earth carbonate salt, and regeneration of lixiviant can be performed using more than one filtration step, as shown in **Figure 2**. Figure 2 schematically depicts an example of such a process. A raw material containing an alkaline earth and another extractable material is contacted with a lixiviant and with carbon dioxide in a reaction vessel 200. A solvent can also be included. The solvent used can be any protic or highly polar solvent that can support the solvation of calcium salts in large amounts. Examples of suitable solvents include water, glycerol, and water glycerol mixtures. The resulting reaction mixture is a slurry of extracted raw material and insoluble alkaline earth carbonate salt (for example, calcium carbonate) suspended in a solvent system that includes a regenerated lixiviant. The slurry is transferred to a first separator 210 and then to a second separator 230, which produces three products streams that include the extracted raw material 240, the alkaline earth carbonate 250, and the regenerated lixiviant 260. In some embodiments one or more additional separator(s) 220 are interposed between separator 210 and separator 230. Use of multiple separators, which can use the same or different separation methods and/or technologies, can provide more complete separation of the various slurry components and result in a higher grade of alkaline earth carbonate product. Surprisingly, the Applicant has found that the characteristic size and/or density of alkaline earth carbonates produced in such a process permits ready separation from the extracted raw material without the use of elaborate separation methods or equipment.

A wide variety of separators and separation modes can be used. Typically, separation can be provided by settling or by centrifugation, although filtration and magnetic separation are also considered. Suitable filtration techniques include the use of bed filters, mesh filters, bag filters, belt filters, and filter presses. As noted above, when multiple separators are used such separators can use the same or similar separation methods or, alternatively, can utilize different separation methods in a sequential fashion. In a preferred embodiment of the inventive concept, when multiple separators are employed at least one of the separators supports continuous separation, and can include a hydrocyclone.

As noted above, lixiviant that is regenerated during the extraction and precipitation process. This advantageously permits the use of sub-stoichiometric amounts of lixiviant compound, reducing the costs of implementing methods of the inventive concept and reducing potential environmental impacts. Separation of solids from the slurry produced in reaction vessel 200 provides a product stream of such regenerated lixiviant 260. This can be returned to the reaction vessel 200 for re-use. Such re-use advantageously further reduces the cost of implementing methods of the inventive concept and can essentially eliminate lixiviant waste.

Following extraction of the alkaline earth, the extracted raw material is enriched in the remaining extractable material (relative to the raw material as supplied). This enrichment can make recovery from the extracted raw material practical where such recovery is not commercially feasible from the raw material as supplied. As shown, the extracted raw material 240 can be further processed 260 to extract such a secondary extractable material 270.

It should be appreciated that the processes schematically depicted in Figure 1 and Figure 2 can be implemented in a continuous fashion. For example, raw material, lixiviant, and carbon dioxide can be supplied to a reaction vessel to initiate the extraction of alkaline earth from the raw material and precipitation of the alkaline earth carbonate as part of a slurry. Additional raw material and carbon dioxide can be continuously supplied to the reaction vessel as the slurry is moved from the reaction vessel and processed, with regenerated lixiviant being returned to the reaction vessel to continue the extraction and precipitation reactions. In some embodiments, additional lixiviant can also be added to make up for losses during processing. Alternatively, process as depicted in Figure 1 and Figure 2 can be performed as a series of batch methods, with individual boluses of raw material being moved through the process sequentially. In other embodiments, processes of the inventive concept can be performed in a semi-batch (or semi-continuous fashion), for example with raw material being supplied to the reaction vessel as a series of individual volumes while the slurry produced by the reaction is moved to separation on a continuous basis.

An embodiment of a process not covered by the claimed invention is depicted schematically in **Figure** 3. Raw material containing an alkaline earth is mixed with a lixiviant in a reaction vessel 300, producing an extracted raw material and a solution containing a solvated alkaline earth. This mixture is transferred to a first separator 310, which produces a stream of solvated alkaline earth that is transferred to a second reaction vessel 320. In some embodiments the extracted raw material is further extracted while in the first separator 310. In other embodiments the extracted raw material is transferred back to the first reaction vessel 300 for further expression. Such embodiments can advantageously improve extraction efficiency and/or yield of the desired alkaline earth from low quality raw materials while accommodating process flexibility. Carbon dioxide is introduced to the solvated alkaline earth in the second reaction vessel 320, producing an insoluble alkaline earth carbonate and regenerating the lixiviant.

In the process of the embodiment not covered by the claimed invention according to Figure 3, the mixture from the second reaction vessel 320 is transferred to a second separator 330, which serves to separate regenerated lixiviant 350A, 350B from alkaline earth carbonate 340. Regenerated lixiviant 350A can be transferred from the second separator 330 back to the first reaction vessel 300 for re-use. In some embodiments, some or all of the regenerated lixiviant 350B is transferred to the first separator 310, where it advantageously supports continued extraction of alkaline earth from processed raw material without the use of additional lixiviant.

In the process of the embodiment not covered by the claimed invention according to Figure 3, a wash step (for example, flushing with water) can be applied to the insoluble alkaline earth carbonate while it is in the second separator 330. This produces a waste stream 360, which can be collected to retrieve lixiviant species. Such a washing step can provide a higher quality, value-added alkaline earth carbonate in a step that is conveniently integrated into the processing method.

It should be appreciated that the processes of the embodiment not covered by the claimed invention schematically depicted in Figure 3 can be implemented in a continuous fashion. For example, raw material and lixiviant can be supplied to the first reaction vessel to initiate the extraction of alkaline earth from the raw material. Additional raw material can be continuously supplied to the first reaction vessel and carbon dioxide can be continuously supplied to the second reaction vessel as their respective reaction mixtures are processed, with regenerated lixiviant being returned to the first reaction vessel and/or the first separator to continue the extraction and precipitation reactions. In some embodiments, additional lixiviant can also be added to make up for losses during processing. Alternatively, the process covered by the claimed invention as depicted in Figure 1 and Figure 2 can be performed as a series of batch methods, with individual boluses of raw material being moved through the process sequentially. In other embodiments, processes of the inventive concept can be performed in a semi-batch (or semi-continuous fashion), for example with raw material being supplied to the reaction vessel as a series of individual volumes while the slurry produced by the reaction is moved to separation on a continuous basis.

Although the alkaline earth is recovered from solution by precipitation in the above described processes, it should be appreciated that other recovery methods are also suitable. In some embodiments of the inventive concept the alkaline earth cation can be recovered from the supernatant without precipitation, for example electrodeposition or ion exchange.

Process optimization for such reactions is simplified by providing means to control the rate of product formation. Reaction conditions can be optimized by adjusting the surface area available for the reaction. Particle size of the calcium containing raw material can be reduced prior to exposure to lixiviant, for example by grinding, milling, or sifting. In some embodiments of the inventive concept the particle size can range from about 0.05 mm to about 1 mm. In other embodiments of the inventive concept the particle size can range from about 0.05 to about 0.25 mm. In a preferred embodiment the particle size can range from about 0.05 mm to about 0.125 mm.

The alkaline earth content of the solution can also be adjusted to provide efficient extraction. In some embodiments of the inventive concept the alkaline earth content is controlled such that the mass ratio of alkaline earth (for example, in terms of CaO to water) can range from about 0.02 to about 0.5. In other embodiments the mass ratio of alkaline earth can range from about 0.05 to about 0.25. In a preferred embodiment of the inventive process the mass ratio of alkaline earth can range from about 0.1 to about 0.15.

Extraction processes can be initiated by the addition of an acid form of a counterion. For example, hydrochloric acid (HCl) generates an organic acid cation/counterion pair with monoethanolamine to form monoethanolamine hydrochloride (MEA+/Cl-) that is active as a lixiviant solution. Monoethanolamine hydrochloride (MEA·HCl, HOC₂H₄NH₃Cl) conforms to Compound 1 as follows: one nitrogen atom (N₁) is bound to one carbon atom (R₁ = C₂H₅O) and 3 hydrogen atoms (R₂, R₃ and H), and there is one chloride counteranion (X₁ = Cl-). The extraction process can be performed at any temperature suitable to support solvation of the alkaline earth salt formed by reaction with the organic amine cation/counterion pair. In some embodiments of the inventive concept the extraction can be performed in a temperature range of about 0° C to about 120° C. In other embodiments of the inventive concept the extraction can be performed within a temperature range of about 20° C to about 100° C. In a preferred embodiment of the inventive concept the extraction can be performed within a temperature range of about 20° C and about 70° C, advantageously reducing the need for temperature control equipment.

The reaction can be stirred during the process of extracting the alkaline earth from the raw material in order to improve reaction kinetics. In some embodiments stirrer speeds can range from about 100 rpm to about 2000 rpm; in other embodiments of the inventive concept stirrer speeds can range from about 200 rpm to about 500 rpm. Equation 6 depicts a critical chemical reaction in such an extraction (in this case calcium, from steel slag that contains contaminants). Note that MEA·HCl dissociates in water into monoethanolammonium cation (HOC₂H₄NH₃+ (MEAH+)) and chloride anion (Cl-). Reaction products include soluble CaClz and uncharged monoethanolamine (MEA)₎.

Ca(OH)₂(s) + 2 HOC₂H₄NH₃+(aq) + 2 Cl-(aq) → CaCl₂(aq) + 2 HOC₂H₄NH₂ (aq) + 2 H₂O(l) **Equation 6**

The extraction process can be performed for any suitable length of time, as defined by the amount and quality of the material to be processed. In some embodiments of the inventive concept the extraction can be performed for 0.5 hours to 24 hours. In other embodiments the extraction can be performed for about 30 minutes. In preferred embodiments of the inventive concept the extraction can be performed for about 15 minutes. Depending in part on the organic amine species used in the lixiviant, the pH of the solution can change during the extraction process, for example increasing as the alkaline earth element is extracted from the sample. In some embodiments of the inventive concept the pH of the solution at the beginning of the extraction can range from about 6 to about 13. In other embodiments of the inventive concept the pH at the end of the extraction step can range from about 10 to about 12.

Extraction of a raw material with a lixiviant leaves insoluble materials (for example, extracted raw material) that are not desirable in the final product. As noted above, in an embodiment not covered by the claimed invention, these can be removed by a variety of means, including settling, centrifugation, and filtration. For example, insoluble materials can be removed by filtration, such as in a filter press that produces a filter cake. In order enhance the efficiency of the process, a filter cake from such a filtration can be washed to remove additional extracted alkaline earth. In some embodiments the filter cake can be treated with a wash volume that is about 10 times that of the wetness of the filter cake. In preferred embodiments of the inventive process lower volumes can be used, for example about 5 times that of the wetness of the filter cake or about 3 times that of the wetness of the filter cake.

In the embodiment not covered by the claimed invention, following separation of the soluble fraction or supernatant from the unreacted contaminants, the solubilized alkaline earth element can be recovered by the addition of a precipitant, for example carbon dioxide (CO₂). The precipitant acts to form an insoluble salt with the alkaline earth element. Surprisingly, inventors have found that CO₂ precipitation of alkaline earth chlorides (for example, CaClz) can proceed efficiently at an acidic pH (i.e., pH < 7). Addition of CO₂ also produces organic amine cation/counterion pair, as shown in 190 and in Equation 7, thereby regenerating the lixiviant.

CaCl₂(aq) + 2 HOC₂H₄NH₂ (aq) + 2 H₂O(l) + CO₂ → CaCO₃(solid) + HOC₂H₄NH₃+(aq) + Cl- **Equation 7**

Such a precipitation reaction can be performed at any temperature suitable to support the solubility of the precipitating agent (for example, CO₂) and maintain the insolubility of the precipitated salt. In some embodiments of the inventive concept the precipitation reaction can be performed at about 4°C to about 100 °C. In other embodiments the precipitation reaction can be performed at about 20°C to about 80 °C. In preferred embodiments of the inventive concept the precipitation can be performed at about 40 °C to about 80 °C.

It should be appreciated that methods of the inventive concept do not require the use of highly purified carbon dioxide. The concentration of CO₂ gas supplied can range from about 0.1% to about 100%. In some embodiments of the inventive concept the concentration of CO₂ gas can range from 10% to about 100%. This advantageously permits relatively low quality or concentration sources of CO₂, for example flue gas or other waste gases, to be utilized. The CO₂-containing gas can be applied at any rate suitable for conversion of essentially all of the calcium present to CaCO₃ within a suitable time, for example about 3 hours to about 4 hours. Suitable flow rates can range from 1 L/hour/mol alkaline earth to about 100 L/hr/mol alkaline earth. In preferred embodiments of the inventive concept the flow rate for CO₂ containing gas can be about 10 L/hour/mol Ca to about 20 L/hour/mol Ca. The pH of the solution can change during the precipitation reaction.

The pH of a working solution can change during precipitation of the solvated alkaline earth. In some embodiments of the inventive concept, the starting pH of the solution can range from about 9 to about 12, and can range from about 6 to about 8 at the end of the precipitation. Advantageously, this pH shift can be monitored to provide an indication of the progress of a precipitation reaction. Surprisingly, inventors have found that such a CO₂ precipitation of alkaline earth chlorides (for example, CaClz) in this process can proceed efficiently at an acidic pH (i.e., pH < 7). The precipitation reaction can be performed until a suitable endpoint is reached. For example, in some embodiments the precipitation can be performed until the pH of the reaction remains below a specified setpoint (for example, a pH of about 8) for at least about 15 minutes.

It should be appreciated that the choice of lixiviant can allow for the selective extraction of an alkaline earth. For example, the use of monoethanolamine hydrochloride facilitates the selective extraction of calcium from many raw materials because it does not react with undesirable metals (ME) or metal oxides/hydroxides (MEOₓ) in the source material, as shown in Equation 8 and Equation 9.

ME(s) + HOC₂H₄NH₃+(aq) → NO REACTION **Equation 8**

MEOₓ(s) + HOC₂H₄NH₃+(aq) → NO REACTION **Equation 9**

As noted above, a soluble alkaline earth salt and lixiviant can easily be separated from the extracted raw material. Once separated, the soluble fraction can used as-is in a target process utilizing the soluble alkaline earth salt, provided that the target process can withstand the lixiviant as a contaminant.

In some embodiments not covered by the claimed invention, a solution containing an alkaline earth cation/counterion complex as shown in Equation 6 can be concentrated or diluted to a desired strength as required by the end user. Alternatively, such a solution can be boiled down or evaporated completely, leaving an alkaline earth element cation/counterion salt and/or various hydrates thereof, depending on how vigorously the mixture is dried. The residual uncharged organic amine could also be removed by this process and optionally captured for reuse. The dried alkaline earth element chlorides could be further processed into oxides via thermal oxidation, precipitation with agents such oxalic acid, sodium hydroxide, potassium hydroxide or other precipitating agents.

. There are of course many possible lixiviants of the form of Compound 1, and there are likewise many alkaline earth element sources. While the examples provided have described the action of two organic amine lixiviants (*i.e*., ammonium chloride and monoethanolamine hydrochloride (a.k.a. monoethanolammonium chloride) with one particular source (steel slag) of a particular alkaline earth element (calcium) other examples of process of the inventive concept can utilize organic amine cation/counterion pairs such as ammonium acetate, monoethanolammonium acetate, ammonium nitrate, or monoethanolammonium nitrate. Alternatively, biologically derived lixiviants such as the amino acid glycine (or a salt of itself) or the hydrobromide salt of poly-L-lysine can be used.

Similarly, while examples note the use of steel slag, other sources (such as calcite, dolomite, gypsum, plagioclases, amphiboles, pyroxenes, and garnets) are suitable. Alternatively, systems, methods, and compositions of the inventive concept can be utilized to recover alkaline earth elements from agricultural waste, consumer waste, industrial waste, scrap or other excess materials from manufacturing processes, or other post-utilization sources.

Many alkaline earth elements can form hydroxides; most of these have very limited solubility in water. These hydroxides also have varying degrees of basicity. While calcium hydroxide as produced from various mineral sources has been cited as an example there are many other alkaline earth elements that form suitable bases in water. Examples of other elements that, in hydroxide form, are suitable for use in systems and methods of the inventive concept include beryllium, magnesium, strontium, barium, and radium. Such salts have different basicities, which can be paired with organic amine based lixiviants of different acidities to provide selective recovery.

It should also be noted that systems, methods, and compositions of the inventive concept are not limited to one alkaline earth species being extracted with one particular lixiviant or set of anions. Multiple alkaline earth species with various organic amine based lixiviants and various anions (or acids) can be used in sequence or in parallel to extract a particular mixture of metals or to produce a particular mixture of metal salts.

In the process covered by the claimed invention the alkaline earth cation is recovered by the addition of carbon dioxide to produce an insoluble alkaline earth salt that is easily recovered. Surprisingly, inventors have found that this precipitation can be performed at a pH of less than 7. In such an embodiment a precipitation step can be performed at a pH between about 6 and about 7. In a preferred embodiment a precipitation step can be performed at a pH of about 6.7. The uncharged organic amine remaining in the supernatant 250 can, in turn, be regenerated 270 in this process to form an organic amine cation that can form part of a lixiviant 220 that can be used in the next iteration of the reaction. This recycling of the lixiviant greatly reduces consumption through multiple cycles of the process and advantageously reduces environmental impact and expense.

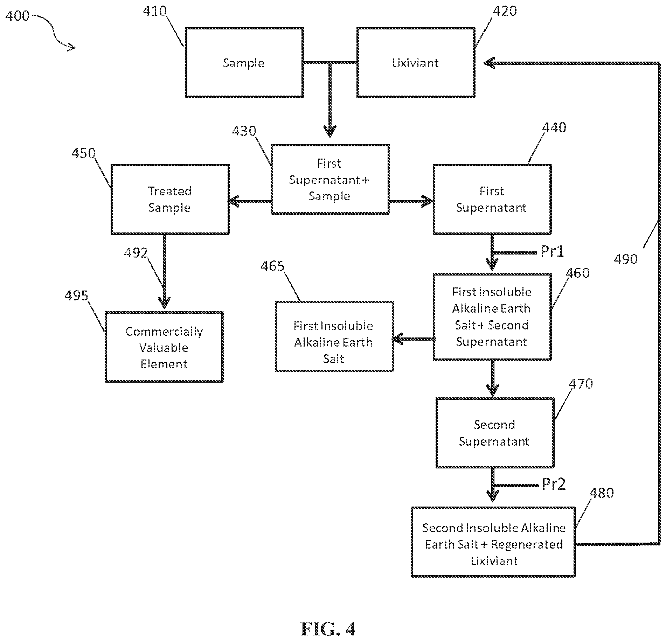

An embodiment not covered by the claimed invention can permit recovery of two or more alkaline earth elements from a sample or a raw material. An example of such a process not covered by the claimed invention is shown in **Figure 4**. In such a method 400 a sample or raw material 410 is contacted with a lixiviant 420 that includes a first organic amine cation/counterion pair and a second organic amine cation/counterion pair. This mixture 430 results in a treated sample 450 and a first supernatant 440. This first supernatant can include a first alkaline earth element cation/counterion pair, a second alkaline earth element cation/counterion pair, a first uncharged organic amine, and a second uncharged organic amine. The first alkaline earth cation can be recovered from the first supernatant 440 by any suitably selective means, including precipitation, electroplating, or ion exchange. In a preferred embodiment of the inventive concept, the first alkaline earth element can be recovered by adding a first precipitant (Pr1) that selectively forms an insoluble salt of the first alkaline earth element (or cation) in a mixture of this insoluble first alkaline earth salt and a second supernatant 460. The components of this mixture 460 can be segregated (for example, by settling, filtration, and/or centrifugation) to provide a first insoluble alkaline earth salt 465 and a second supernatant 470 (which can be further processed). For example, in a sample containing a mixture of magnesium and calcium, the calcium can be recovered in this step of the reaction by the addition of chromic acid as a first precipitant (P1) to form relatively insoluble calcium chromate (CaCrO₄); relatively soluble magnesium chromate (MgCrO₄) would remain in solution.

It should be appreciated that, in a process covered by the claimed invention as shown in Figure 1 and Figure 2 a precipitant (for example, carbon dioxide) can be added simultaneously or essentially simultaneously with contacting a sample or raw material with the first lixiviant. In such an embodiment the mixture 430 would also include the first insoluble alkaline earth salt. Such a mixture can be segregated into treated sample or raw material 410, first insoluble alkaline earth salt 465, and second supernatant 470 by a variety of means, including settling, filtration, and centrifugation. The second supernatant 470 can then be treated as described below. The treated sample or raw material 450, which is enriched for other materials following the extraction of the alkaline earths by the lixiviant, can be processed 492 to recover other commercially valuable metals or other materials 495. Such processing 492 can include treatment with a different lixiviant, electrodeposition, smelting, and/or other processes.

Recovery of the second alkaline earth cation from the second supernatant 470 also yields a regenerated lixiviant 490. The second alkaline earth cation can be recovered from the second supernatant 470 by any suitable means, such as precipitation , electrodeposition, or ion exchange. In some embodiments of the inventive concept, the second alkaline earth element can be recovered by adding a second precipitant (Pr2) that forms a mixture 480 of an insoluble salt of the second alkaline earth element and completes regeneration of the lixiviant. For example, in a sample containing a mixture of magnesium and calcium, the magnesium can be recovered in this step of the reaction from a supernatant resulting from chromic acid treatment by the addition of CO₂ or carbonic acid as a second precipitant (P2) to form relatively insoluble calcium carbonate (CaCO₃). The regenerated lixiviant 490 can in turn be recycled in the next iteration of the process. Similarly, in some embodiments the regenerated lixiviant can be returned to an intermediate separation step (for example step 430 and/or step 460) to provide additional extraction and solubilization of the desired alkaline earths.

In some embodiments of the inventive concept the first organic amine and the second organic amine (and their respective cations) can be different molecular species with different acidities and/or specificities for alkaline earth elements. In other embodiments of the inventive concept the first organic amine and the second organic amine can be the same molecular species, with selectivity between the first alkaline earth element and the second alkaline earth element being provided by the method used for their recovery from supernatants. It should be appreciated that, as described in the process illustrated in Figure 2, that regeneration and re-use of the lixiviant through repeated iterations advantageously reduces the amount of organic amine needed, which limits both the environmental impact of such operations and permits considerable savings in materials.

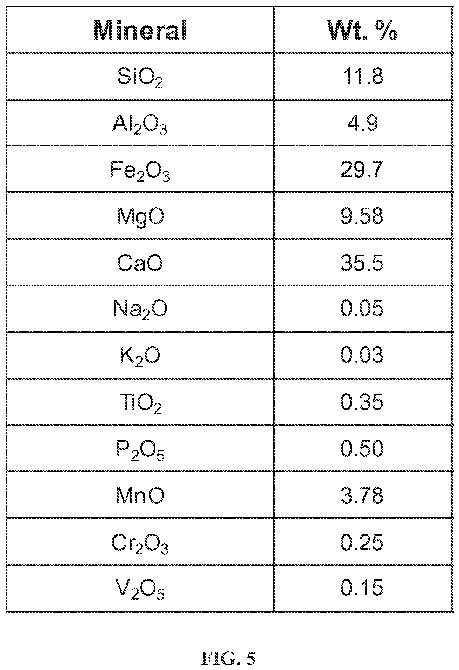

A specific example of a raw material suitable for calcium is steel slag. The composition of a typical steel slag is shown in **Figure 5**. As shown, steel slag is a complex mixture of various metal oxides including calcium oxide (CaO), which becomes calcium hydroxide (Ca(OH)₂) on exposure to water. Typically, steel slag (or an alternative calcium source) is ground to less than around 125 µm prior to processing. This greatly increases the surface area available for reaction while still providing a material that settles quickly. In exemplary extraction processes not covered by the claimed invention water and lixiviant are mixed in a suitable ratio, which can range from 1% to about 50%. The ground slag and aqueous lixiviant are mixed and then stirred or agitated for a time sufficient to form the calcium cation/counterion pair. This mixing time can range from about 1 minute to about 12 hours. In a preferred embodiment this missing time is about 10 minutes. The solid residue, which is depleted of calcium, is removed and the liquid fraction or supernatant is processed by adding carbon dioxide (or an equivalent, such as carbonic acid) to precipitate calcium carbonate (CaCO₃). This process also regenerates the lixiviant. Alternatively, in some embodiments carbon dioxide can be added to the mixture of ground steel slag and lixiviant to form a mixed slurry of regenerated lixiviant, high density extracted steel slag particles, and relatively low density precipitated calcium carbonate. CaCO₃ prepared by such methods can be prepared for further processing by washing, dilution into a slurry, and other suitable methods while regenerated lixiviant is recycled for re-use.

Examples of the recovery of calcium by systems, methods, and compositions not covered by the claimed invention are shown in **Figure 6A** - **Figure 6D****.** **Figure 6A** shows the change in pH over time as calcium is extracted from low-grade lime using monoethanolamine-HCl (MEACL) as the organic amine lixiviant. In this reaction 5 grams of low-grade lime was mixed with 50 grams of water containing the lixivant at a lixiviant to calcium molar ratio of 2.1:1, while stirring 400 rpm. In this example excess lixiviant was used in order to insure that the reaction was driven to completion. As shown below, such extractions can be performed efficiently using substoichiometric amounts of lixiviant. The reaction was allowed to proceed for 23 minutes. **Figure 6B** shows the results of a similar study, in which the pH was monitored over time as calcium is extracted from low-grade lime using glycine as the organic amine lixiviant. It should be appreciated that as an amino acid glycine can be advantageously derived from biological sources and that, due to its zwitterionic nature, glycine can act as its own counterion. In this reaction 5 grams of low-grade lime was mixed with 50 grams of water containing the lixiviant at a lixiviant to calcium molar ratio of 2.1:1, while stirring at 400 rpm. The reaction time was allowed to proceed for 24 minutes. **Figure 6C** shows the results of recovery of extracted calcium using a precipitant, in this instance CO₂. In this example pH was monitored as CO₂ was perfused through calcium extracted from low grade lime using monoethanolamine-HCl as the lixiviant. The reaction was performed for 11 minutes as 100% CO₂ was perfused through the solution at 20 mL per minute at a temperature of 22° C, while stirring at 400 rpm.

A photomicrograph of an exemplary product from the extraction of calcium using systems, methods, and compositions not covered by the claimed invention is shown in **Figure 6D**. The reaction was performed using 10 grams low-grade (~50% CaO content) lime, which was treated with 19.7 grams of monoethanolamine-HCl in100 grams water and stirred at 400 rpm for 30 minutes. Solid residue was removed by filtration and the filtrate perfused with 100% CO₂ at a flow rate of 20 mL/min at a temperature of 60° C, until the pH was less than 8 for 15 minutes. The yield of precipitated calcium carbonate (PCC) was 86%.

Advantageously, efficiencies of plants operated using methods of the inventive concept can be very high. In mass balance studies for a typical iteration of a process of the inventive concept applied to calcium isolation from steel slag, only 7.22 kg of lixiviant is lost for 4,301 kg of 97.8% calcium carbonate produced. Over 99.9% of the lixiviant used in such a reaction is recycled from previous iterations. Similarly in mass balance studies of calcium isolation from lime, in a typical iteration only 9.39 kg of lixiviant are lost for 4,301 kg of 99.8% pure calcium carbonate produced. Over 99.85% of the lixiviant used in such a reaction is recycled from previous iterations.

Surprisingly, methods of the inventive concept can efficiently extract alkaline earths from raw materials using only a fraction of the lixiviant utilized in prior art processes. In essence, the extraction-precipitation cycle is repeated continuously utilizing a small (for example, sub-stoichiometric) amount of lixiviant that is regenerated during the cycle. In this way, the amine-containing lixiviant species acts a pseudocatalyst.

In exemplary single step processes (for example, as described in **Figure 1** and **Figure 2**), where alkaline earth carbonates are precipitated in the presence of the raw material and/or extracted raw materials (which are generally supplied as particulates), efficient recovery or segregation of the desired alkaline earth carbonate can be dependent upon distinguishing between particulate species in the resulting mixture. In preferred embodiments of the inventive concept, reaction conditions and raw materials are selected so that the physical dimensions, settling rate, density, and/or magnetic properties of the particles of alkaline earth carbonate generated by the process and the particles of raw material and/or extracted raw material are sufficiently distinct to permit such separation. For example, in some embodiments of the inventive concept process conditions are selected such that the particulates forming the alkaline earth carbonate precipitate can range from 0.1 µm to 10 µm in size. In processes that utilize settling or decantation for separation the product alkaline earth precipitate can have a settling velocity that is substantially lower (i.e. 50% or less) than that of the extracted raw material, which can range in size from 50 µm to 500 µm in diameter. For example, steel slags and extracted steel slags with a size range of 100 µm to 500 µm (with an average diameter of 230 µm) was found to settle approximately 130 times more quickly than a product calcium carbonate precipitate particle have an average particle diameter of 15 µm. It should be appreciated that, for some raw materials, the density of the raw material, the extracted raw material, and the product alkaline earth precipitate can be similar, in which case separation behavior can be largely determined by particle size. In a preferred embodiment, the diameter of an alkaline earth carbonate precipitate can range from 250 nm to 10 µm. The mean size and size distribution of such an alkaline earth carbonate product can be controlled, for example, by modulating the stirring speed within the reactor and/or the rate of CO₂ addition. A wide range of particle sizes is acceptable for the raw material, and the optimal particle size for a given process may be determined by the economic impact of milling or grinding of the raw material and yield (as larger particle sizes can be associated with reduced yield). In a preferred embodiment the average particle size of the raw material is 200 µm. Suitable operating temperatures for single-step processes are similar to those of the two-step processes described above. In a preferred embodiment of the inventive concept a single-step process is performed at approximately 60 °C.

As noted in the processes described above, separation of the precipitated alkaline earth carbonates and the extracted raw material is performed in a separator. The separators referred to in the above described processes can utilize a wide variety of processes and/or physical phenomena to segregate solids from liquids. Similarly, suitable separators can perform segregation operations in a fixed volume or batch format or on a continuous basis, as fits the requirements of the process. For example, suitable separators can use simple fractionation methods such as gravitational settling, decanting, or desilting. Alternatively, suitable separators can perform filtration, for example using press filters, rotary pressure filters, and/or vacuum belt filters. In other embodiments, a separator can use centrifugal force, for example via a centrifuge or hydrocyclone. In still other embodiments a separator can utilize magnetic effects (for example as provided by a magnet or electromagnet) to separate magnetically responsive (i.e. magnetic, diamagnetic, and/or paramagnetic) materials, for example treated steel slag particulates, from other materials that do not respond to magnetic fields.

It should be appreciated that centrifugal separation techniques advantageously permit continuous separation, and can be configured to segregate micron-scale particles of carbonate precipitates from larger and/or denser raw material residue particles from a particulate mixture generated by simultaneous performance of the above described extraction and precipitation reactions.

An embodiment not covered by the claimed invention is a system that is configured to perform the single-step methods described above. Such a system can switch between continuous and intermittent modes of operation to accommodate the needs of the operation and/or the availability of materials. Such a system can include a reaction enclosure, in which raw material, a lixiviant solution, and a precipitant (such as CO₂ containing gas) are brought into contact with one another. Such a reaction enclosure can include one or more sensors that provide data related to the progress of the reaction. For example a reaction enclosure can include a device for characterizing the pH of the reaction mixture, which as shown **Figure 6A**, and **Figure 6B** changes during the course of the reaction. Other suitable sensors include an ion-selective electrode, densitometer, spectrophotometer, nephelometer, and particle characterization devices based on the Coulter principle. Such sensors can provide data to a controller, which in turn can modulate the rate of the reaction by controlling the rate of introduction of raw material, lixiviant species, and/or precipitant to the reaction enclosure. The reaction enclosure is in communication with a separator. In some embodiments of the inventive concept such a reaction enclosure (or a portion thereof) can act as a separator. For example, a reaction enclosure can be configured or have a portion that is configured for use in decanting (for example, being configured as a vertically oriented cylinder or cone). In other embodiments a separating device can lie within or be in fluid communication with the reaction enclosure. For example, a reaction enclosure can be in fluid communication with a filter device (such as a filter press) or a centrifugal separator (such as a centrifuge or a hydrocyclone). Such separating devices permit separation of the precipitated alkaline earth salt from the extracted and/or unreacted raw material, and from the liquid phase of the reaction mixture.

A system according to an embodiment not covered by the claimed invention can be configured to operate in a discontinuous or in a continuous manner. When operated in a discontinuous manner an amount of raw material, an amount of lixiviant species, and an amount precipitant are provided to the reaction enclosure and the reactions described above allowed to proceed. At least one of these reactants (for example the raw material and/or the lixiviant species) is added to the reaction enclosure as a single bolus. This results in the formation of an alkaline earth containing precipitant that is separable from the extracted raw material and a solution phase that includes the lixiviant species. At the completion of the reaction the reaction products are separated, and the process repeated in a repetition of the reaction cycle. When operated in a continuous manner raw material, lixiviant, and precipitant (for example, a CO₂ containing gas) are added to the reaction enclosure essentially continuously (i.e. continuously or as a continuous series of small, distinct volumes), generating an equilibrium reaction mixture that is separated essentially continuously (i.e. continuously or as continuous series of small, distinct volumes). It should be appreciated that in such an embodiment the addition of lixiviant species is inclusive of the return of regenerated lixiviant resulting from the separation process to the reaction enclosure.

Surprisingly, the inventors have found that such single-step processes (in which extraction of the alkaline earth using a lixiviant is coupled with precipitation of the alkaline earth and regeneration of the lixiviant species, examples of which are shown in **Figure 1** and **Figure 2**) can be more efficient for extraction of alkaline earths, for example calcium, from raw materials than two-step or segregated processes (in which extraction of the alkaline earth using a lixiviant is decoupled from precipitation of the alkaline earth and regeneration of the lixiviant species, an example of which is shown in **Figure 3**). Examples that illustrate this follow.

### Examples

### Raw Materials and Methods

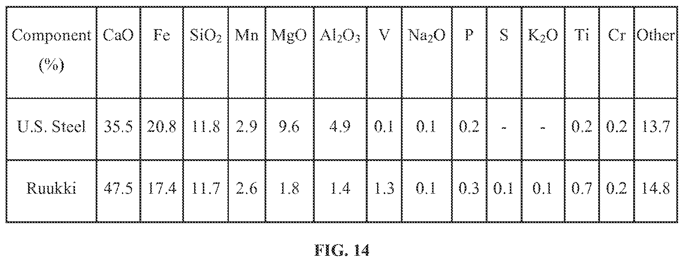

Two basic oxygen furnace (BOF) slags were utilized as raw material sources of extractable calcium oxides/hydroxides in these experiments. One sample consisted of raw fines from U.S. Steel Lake Erie Works, Canada, while the other was a sample from a reject stream generated by a slag recycling plant at Ruukki Metals Raahe Works, Finland. The compositions of these slags, analyzed with XRF, are presented in the table shown in **Figure 14**. Because the materials had been stored outdoors, they were calcined for three hours at 900 °C before extraction to reduce any material that may have already been carbonated by environmental factors.

The U.S. Steel slag was directly sieved to the desired size fractions, while Ruukki slag was first milled to smaller particle sizes and then sieved to the final desired size fractions. In the experiments a specified amount of slag was mixed with a volume of ammonium chloride lixiviant solution of known concentration in a covered beaker with a magnetic stirrer. Solution pH was recorded using an Omega PHH-SD1 pH meter.

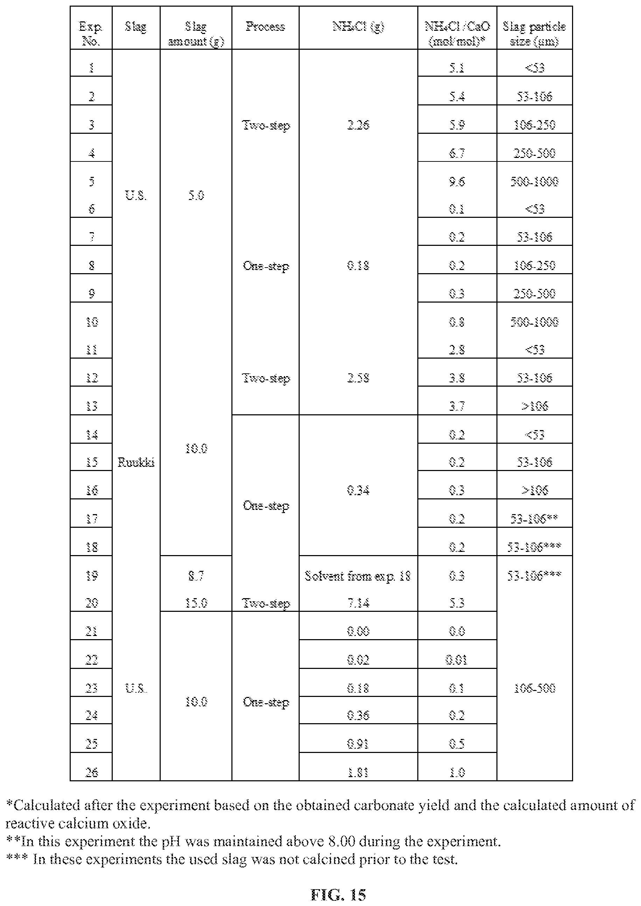

Two types of process tests were conducted; two-step processes were performed as described in the prior art, and served to provide estimates of the extractable calcium available through traditional processes. Towards this end the ammonium chloride lixiviant solution was provided in molar excess (see **Figure 15**) to avoid stoichiometric limitations. The raw material was first mixed with the NH₄Cl solution for 30 minutes. After removal of the residual extracted raw material by filtration, carbon dioxide gas was bubbled through the filtrate for 45 minutes. The obtained carbonates were filtered from the solution, and the amount of extractable calcium was determined by gravimetric analysis following drying the solids overnight at 80 °C.

In one-step processes of the inventive concept, the raw material was first suspended in water and the pH allowed to stabilize. Following this, sub-stoichiometric quantities of ammonium chloride salt (as determined from the results of the amount of extractable calcium recovered from single step processes above) were added to the suspension and carbon dioxide gas was fed to the reactor until solution pH decreased to 8.00, after which the flow of CO₂ was stopped for 30 minutes, allowing pH to increase and stabilize. To insure complete precipitation of the calcium, the flow CO₂ gas was re-started while monitoring the pH decrease. The flow of CO₂ gas was continued for 10 minutes after the pH reached 8.00. The experiment was finished without gas flow, recording the pH increase for seven additional minutes. These time periods were selected based on the single step process described above to permit comparison between the different experiments, and can be further optimized. The components of the final reaction mixture were separated by decanting followed by filtration. The lighter calcium-rich fraction was first decanted from the reaction vessel to a filter, while the heavier slag residue particles remained at the bottom of the vessel and were filtered separately. Before weighing, the samples were dried overnight at 80 °C.

In mass balance calculations it was assumed that all the observed mass increase resulted from captured carbon dioxide. The produced calcium carbonate amount was calculated based on this assumption. The obtained fractions were analyzed with SEM/EDX to characterize their composition and particle structure. Select liquid samples were analyzed with ICP-OES.

The experimental conditions from this series are summarized in **Figure 15**. The slag-to-liquid ratio of the suspension was 100g/L, temperature and pressure were ambient, and a pure CO₂ gas flow rate of 75 mL/min was used.

### Results

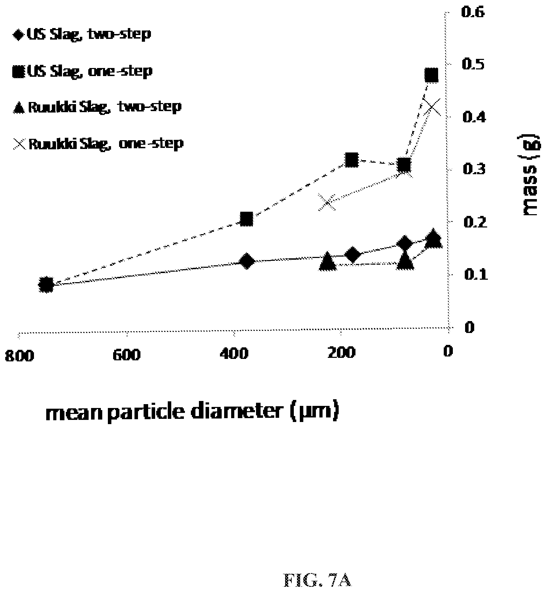

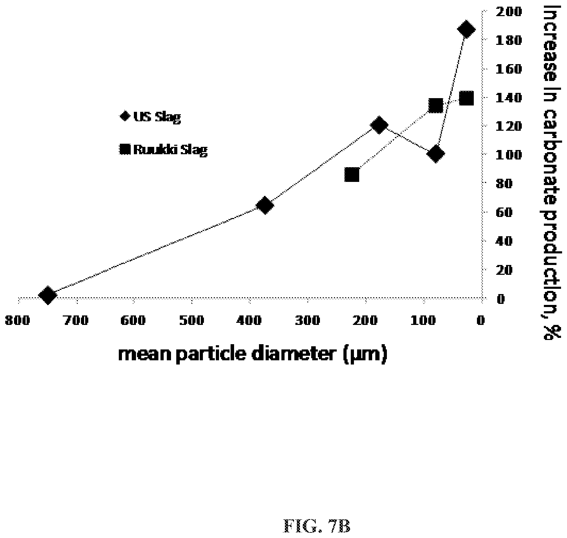

Calcium extraction and carbonate precipitation from different slag particle size fractions (experiments 1-16) were studied with both one- and two-step methods. **Figure 7A** shows that for the largest slag particles (500-1000µm), the yields of the compared process alternatives were equivalent. While yield increased as the raw material particle size decreased for both one-step and two-step processes, the increase in yield for the single-step process was dramatically greater than that of the two-step process for both raw materials. Surprisingly, as shown in **Figure 7B**, in a one-step process with small <53 µm slag particles the carbonate yield almost tripled compared to the prior art two-step process (i.e. showed an almost 200% increase over and above the yield of the two-step process). With intermediate particle sizes the increase in carbonate production was 100-150%. Both U.S. Steel slag and Ruukki slag followed the same trend, suggesting a critical particle size, above which both processes result in similar carbonate yields.

Interestingly, U.S. Steel slag with particle sizes 53-250µm displayed a plateauing in carbonate yield. The yield increased once particle sizes were reduced to below 53 µm. It is known that during slag formation calcium tends to enrich in small particles. Thus, the U.S. Steel slag size fractions may have differences in composition, with the sieving process resulting in a segregation of these different particle compositions. Since the Ruukki slag sample was milled from large particles prior to sieving into particle size fractions, the different fractions of the Ruukki slag may have a consistent composition and more directly show the effect of particle size.

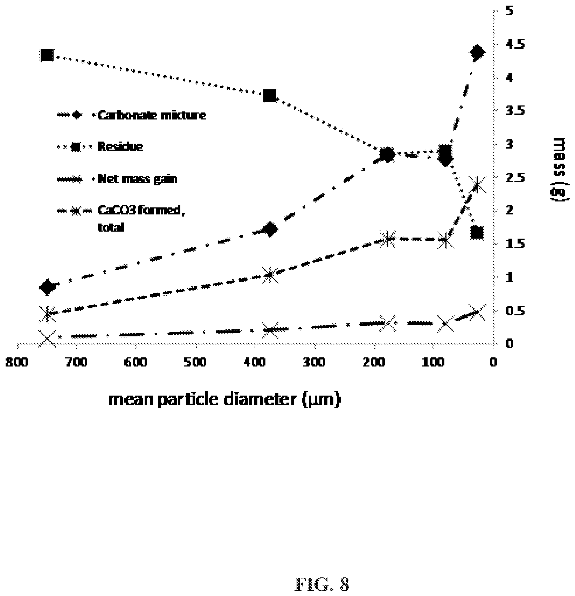

**Figure 8** shows the masses of the separated fractions produced by one-step processes applied to U.S. Steel slag (*i.e.* experiments 6-10). The mass of the lower density "carbonate mixture" fraction increases with decreasing slag particle size. This is not only because of the increased recovery of calcium carbonate, but also because the smaller slag residue particles do not separate as efficiently from the carbonate particles by decanting methods. This is especially true for the <53µm slag particles; the mass of "residue" (i.e. extracted raw material) was decreased, indicating that the extracted slag particles may have similar settling properties to those of the produced calcium carbonate.

In experiments 1-19 the molar ratio of ammonium chloride and reactive calcium oxide varied in part due to changes in the amount of extractable calcium related to particle size effects. Earlier research has shown that in the two-step process ammonium salt solution concentration does not significantly affect the calcium yield, assuming that the chosen concentration exceeds the stoichiometric limits defined by **Scheme** 1. However, it is known that at ammonium salt concentrations above 1.5 M the selectivity towards calcium extraction diminishes, resulting in extraction of other elements such as Fe and Mn that can impact mass-based yield calculations.

On this basis it was expected that one-step calcium carbonation process yields would be largely independent of lixiviant stoichiometry. To confirm this, a series of experiments (experiments 21-26) were performed using varying lixiviant molarities at a constant slag particle size (106-500µm).

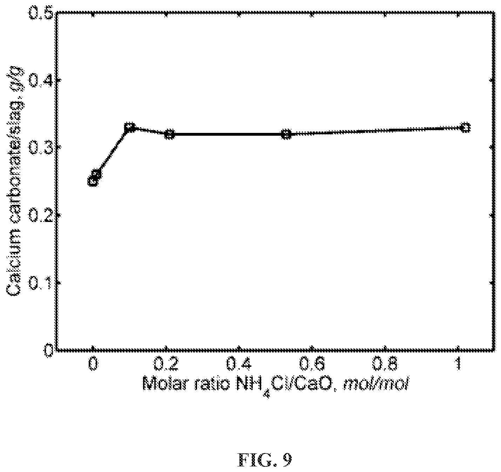

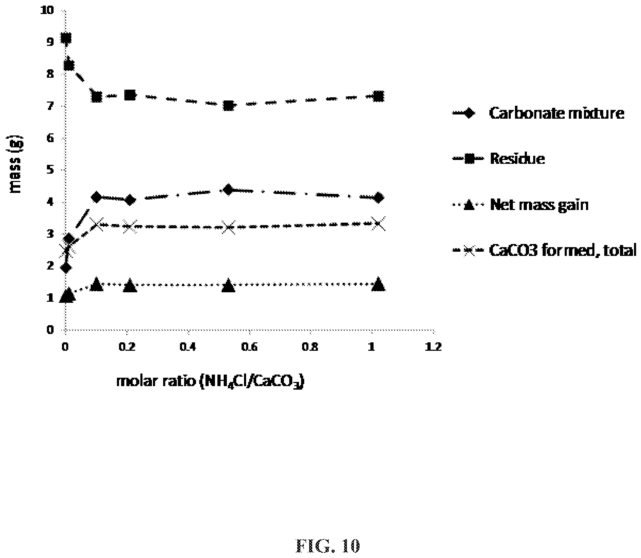

**Figure 9** and **Figure 10** show that the molar ratio between the ammonium salt lixiviant and reactive calcium had no significant effect on the resulting carbonate yields above a certain minimum value during the one-step processes, even when substantially sub-stoichiometric amounts of lixiviant species are used. Only at very low values (0-0.01 mol NH₄Cl/mol CaO), *i.e.* in case of almost pure distilled water as a solvent, was the calcium carbonate yield reduced. Surprisingly, it is also apparent that the carbonate yield from one-step experiments was still higher (0.25 g/g) without lixiviant than from two-step experiments utilizing a high lixiviant concentration (0.10-0.17 g/g). Without wishing to be bound by theory, the inventors theorize that carbonate formation within the raw material slag particles acts to disrupt the particle structure, thereby exposing more alkaline earth for additional solvation and subsequent carbonation.

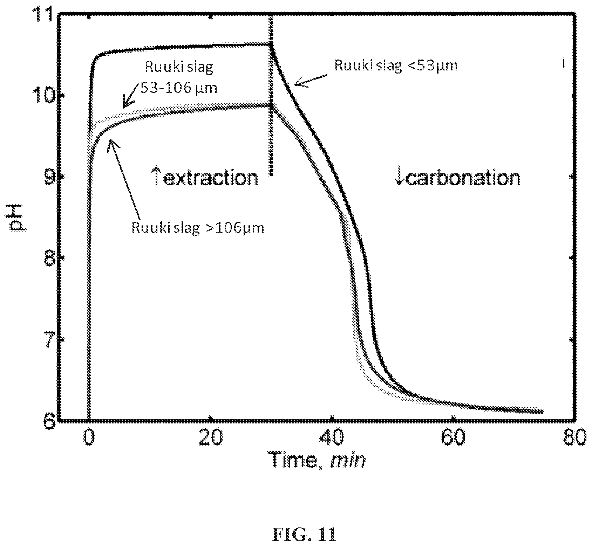

**Figure 11** shows the recorded pH values in two-step experiments 11-13 with Ruukki slag. Extraction and carbonation are combined as one graph, even though the slag residue was filtered from the solution after 30 minutes. The variations in ammonium/calcium ratio affect the pH level; with smaller particles (which presumably contain more accessible calcium), a pH of roughly 10.5 is reached during extraction, compared to 9.7 with the larger particles. The pH decrease during carbonation also requires a longer time for small particles.

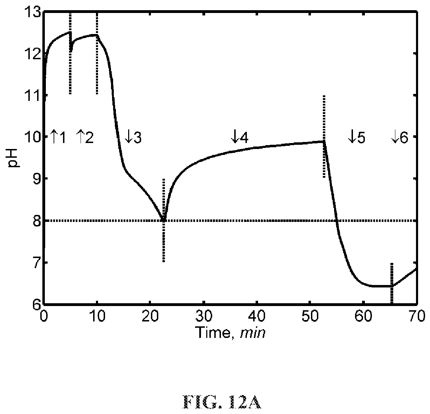

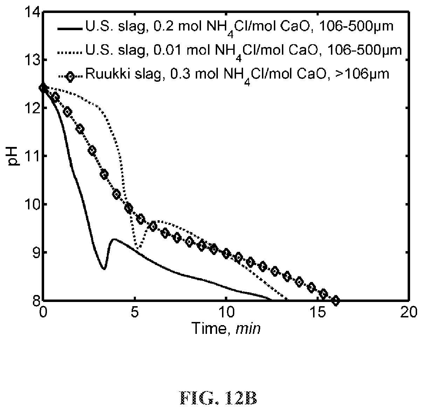

Typical pH changes during a one-step reaction are shown in **Figure 12A**, where different steps in the procedure are indicated by numbered arrows. In step 1, the slag raw material is added to water to make a suspension. The amine-containing lixiviant (for example, NH₄Cl) is added in step 2, and the initial application of CO₂ gas occurs in step 3. Note that the raw material suspension is strongly basic, and that the pH drops rapidly as CO₂ is applied. The application of CO₂ is halted in step 4 and started again in step 5. Step 6 marks the termination of the reaction. Differences in pH measurements between the various experiments were small; larger amounts of reactive raw material were observed to result in larger pH changes during all time periods. A more detailed study of pH changes during application of CO₂ in a single-step process is shown in **Figure 12B** shows a comparison of pH change deviations during the first carbon dioxide feed period in reactions performed at different lixiviant ratios and with different sources of raw material. At low (0.01 mol NH₄Cl/mol CaO) ammonium chloride concentration the pH changes at a slower rate than at relatively higher (0.2 mol NH₄Cl/mol CaO) for the same size fraction of U.S. Steel slag. With Ruukki slag the pH decrease is monotonic, while the U.S. slag causes an increase in pH, occurring 3-5 minutes after the start of the gas feed, possibly indicating a biphasic reaction.

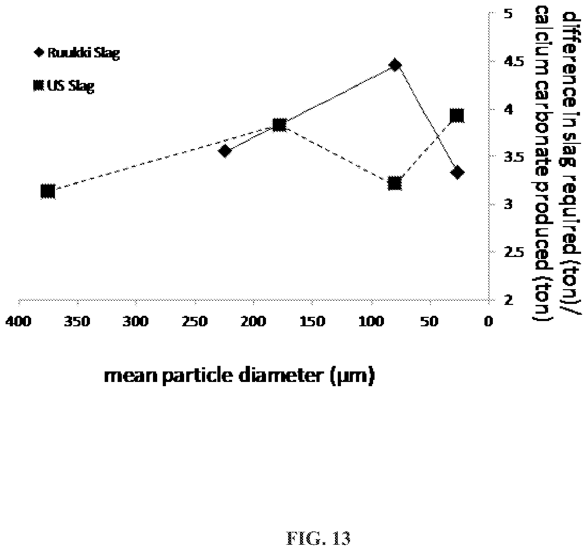

The one-step steel slag carbonation process has a number of advantages compared to the two-step approach. Because the lixiviant is used in smaller amounts, the chemical cost is remarkably reduced even without recovery and recycling of the ammonium salt solution, resulting also in a simpler process setup. In addition, the higher efficiency of the process reduces the amount of raw material that needs to be processed. As shown in **Figure 13** (which shows the difference in slag amount to be processed for production of one of ton calcium carbonate with one- and two-step methods), the prior art two-step process requires 3.1-4.5 tons more steel slag to produce 1 ton of carbonate product than is required for the one-step process. This is essentially because, firstly, slag is processed and utilized to a larger extent, leaving a smaller amount of residue for waste handling. In addition, up to 140 kg more CO₂ per ton of slag can be captured in processing by the single-step process compared to the traditional two-step process (depending on the slag particle size). As such, the climate change mitigation potential is noticeably increased. Finally, if the product is a calcium carbonate that is utilized in steel manufacturing more calcium can be recycled at the steel plant, thus reducing the need for virgin calcium raw materials.

It should be appreciated that the methods described above can be equally applicable to the processing of alkaline earth elements other than calcium, for example beryllium, magnesium, strontium, barium, and radium. It should be appreciated that multiple iterations of the processes described above can be applied sequentially or in series with suitable precipitating compounds in order to generate a series of insoluble alkaline earth salts from a single source material, and that individual members such a series of insoluble alkaline earth salts can have different alkaline earth element compositions.

## Claims

1. A method for producing an alkaline earth carbonate comprising;
introducing a primary raw material comprising a first extractable material and a second extractable material to a vessel, wherein the first extractable material comprises an alkaline earth oxide or hydroxide;
contacting the primary raw material with an organic amine-containing lixiviant to generate a reaction mixture, wherein the lixiviant is provided in sub-stoichiometric amounts relative to the alkaline earth;
contacting, in the vessel, the reaction mixture with carbon dioxide to form a slurry, wherein the slurry comprises an extracted raw material and an alkaline earth carbonate precipitate, wherein the extracted raw material is enriched in the second extractable material relative to the primary raw material;
transferring the slurry to a separation unit to generate a first product stream comprising the extracted raw material, a second product stream comprising the alkaline earth carbonate precipitate, and a third product stream comprising a mother liquor;
collecting the first product stream and processing the extracted raw material to extract the second extractable material; and,
returning at least a portion of the third product stream to the vessel, wherein the mother liquor comprises a regenerated organic amine-containing lixiviant.

2. The method of claim 1, wherein the separation unit employs a separation method selected from the group consisting of filtration, settling, centrifugal separation, and magnetic separation.

3. The method of claim 1, further comprising the step of collecting the second product stream and washing the alkaline earth carbonate.

4. The method of claim 1, wherein the method is performed in a continuous fashion.

## Patentansprüche

1. Verfahren zum Herstellen eines Erdalkalicarbonats, umfassend:
Einführen eines primären Rohmaterials, das ein erstes extrahierbares Material und ein zweites extrahierbares Material umfasst, in ein Gefäß, wobei das erste extrahierbare Material ein Erdalkalioxid oder -hydroxid umfasst,
Kontaktieren des primären Rohmaterials mit einem organischen aminhaltigen Auslaugmittel, um eine Reaktionsmischung zu erzeugen, wobei das Auslaugmittel in substöchiometrischen Mengen relativ zu dem Erdalkali vorgesehen wird,
Kontaktieren, in dem Gefäß, der Reaktionsmischung mit Kohlendioxid, um eine Schlämme zu bilden, wobei die Schlämme ein extrahiertes Rohmaterial und ein Erdalkalicarbonat-Präzipitat umfasst, wobei das extrahierte Rohmaterial in dem zweiten extrahierbaren Material relativ zu dem primären Rohmaterial angereichert ist,
Übertragen der Schlämme zu einer Trenneinheit, um einen ersten Produktstrom, der das extrahierte Rohmaterial umfasst, einen zweiten Produktstrom, der das Erdalkalicarbonat-Präzipitat umfasst, und einen dritten Produktstrom, der eine Mutterlauge umfasst, zu erzeugen,
Sammeln des ersten Produktstroms, und Verarbeiten des extrahierten Rohmaterials, um das zweite extrahierbare Material zu extrahieren, und
Zurückführen wenigstens eines Teils des dritten Produktstroms zu dem Gefäß, wobei die Mutterlauge ein regeneriertes organisches aminhaltiges Auslaugmittel umfasst.

2. Verfahren nach Anspruch 1, wobei die Trenneinheit ein Trennverfahren verwendet, das aus der Gruppe ausgewählt ist, die aus einer Filtration, einem Absetzen, einer zentrifugalen Trennung und einer magnetischen Trennung besteht.

3. Verfahren nach Anspruch 1, das weiterhin einen Schritt zum Sammeln des zweiten Produktstroms und zum Waschen des Erdalkalicarbonats umfasst.

4. Verfahren nach Anspruch 1, wobei das Verfahren kontinuierlich durchgeführt wird.

## Revendications

1. Procédé de production d'un carbonate alcalino-terreux comprenant ;
l'introduction d'une matière première primaire comprenant une première matière extractible et une deuxième matière extractible dans un récipient, la première matière extractible comprenant un oxyde ou hydroxyde alcalino-terreux ;
la mise en contact de la matière première primaire avec un lixiviant contenant une amine organique pour générer un mélange réactionnel, le lixiviant étant fourni en quantités sousstoechiométriques par rapport à l'alcalino-terreux ;
la mise en contact, dans le récipient, du mélange réactionnel avec du dioxyde de carbone pour former une suspension, la suspension comprenant une matière première extraite et un précipité de carbonate alcalino-terreux, la matière première extraite étant enrichie en la deuxième matière extractible par rapport à la matière première primaire ;
le transfert de la suspension dans une unité de séparation pour générer un premier courant de produits comprenant la matière première extraite, un deuxième courant de produits comprenant le précipité de carbonate alcalino-terreux et un troisième courant de produits comprenant une liqueur mère ;
la collecte du premier courant de produits et le traitement de la matière première extraite pour extraire la deuxième matière extractible ; et
le renvoi d'au moins une partie du troisième courant de produits dans le récipient, la liqueur mère comprenant un lixiviant régénéré contenant une amine organique.

2. Procédé selon la revendication 1, dans lequel l'unité de séparation utilise un procédé de séparation choisi dans le groupe constitué par la filtration, la décantation, la séparation centrifuge et la séparation magnétique.

3. Procédé selon la revendication 1, comprenant en outre l'étape de collecte du deuxième courant de produit et de lavage du carbonate alcalino-terreux.

4. Procédé selon la revendication 1, dans lequel le procédé est exécuté en continu.
